(19) Europäisches Patentamt
European Patent Office
Office européen des brevets

(11) **EP 2 492 528 A1**

(12) **DEMANDE DE BREVET EUROPEEN**

(43) Date de publication:
**29.08.2012 Bulletin 2012/35**

(51) Int Cl.:
*F16C 32/04* (2006.01)          *F16C 39/06* (2006.01)
*H02K 7/02* (2006.01)          *F16F 15/315* (2006.01)

(21) Numéro de dépôt: **12156626.9**

(22) Date de dépôt: **23.02.2012**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **23.02.2011  FR 1151450**

(71) Demandeur: **Atmostat**
**94800 Villejuif (FR)**

(72) Inventeur: **Duval, Jean**
**17290 THAIRE (FR)**

(74) Mandataire: **Hirsch & Associés**
**58, Avenue Marceau**
**75008 Paris (FR)**

(54) **Dispositif tournant avec butée à roulement et suspension magnétique pour l'allègement de la butée, notamment pour volant d'inertie**

(57)     L'invention se rapporte à un dispositif tournant comprenant
- un rotor (1) guidé en rotation autour d'un axe vertical,
- une butée mécanique roulante (2) et une suspension magnétique (3), la contribution au portage du rotor le long de l'axe vertical étant répartie entre la butée mécanique roulante et la suspension magnétique.

L'association parallèle de la butée mécanique et de la suspension magnétique permet la restitution d'énergie stockée dans le rotor en rotation de manière efficace.

Figure 1

**EP 2 492 528 A1**

**Description**

La présente invention concerne un dispositif tournant notamment pour volant d'inertie.

De nouveaux moyens de production d'énergie électrique voient le jour comme les panneaux photovoltaïques solaires, les éoliennes, les usines marée-motrices, l'utilisation de la houle, etc. Mais cette production d'électricité n'est disponible que de façon aléatoire, non-synchronisée avec les besoins des utilisateurs. Il y a donc un besoin de stocker cette énergie quand elle est disponible, de préférence près du point de production pour éviter les pertes dues au transport, pour la restituer quand elle est nécessaire.

Il existe très peu de dispositifs permettant de stocker des quantités significatives d'énergie, en particulier électrique, et leur rendement, c'est-à-dire le rapport entre l'énergie restituée sur l'énergie apportée, est très souvent médiocre. On peut citer :

- les batteries d'accumulateurs qui sont chères, lourdes et avec un rendement globalement faible,
- les super-condensateurs qui ont un bon rendement mais dont la capacité reste très limitée,
- les réserves d'eau en altitude, obtenues par pompage de l'eau d'un niveau bas vers un niveau haut, ce qui permet de récupérer de l'énergie potentielle de gravité à l'aide de turbines, lors du retour de l'eau au niveau bas. De tels dispositifs ont un rendement très médiocre et ne sont envisageables qu'à des endroits particuliers comme les régions montagneuses où il existe des lacs d'altitude.

Les dispositifs de stockage de l'énergie sous forme d'énergie cinétique ne sont pas développés actuellement car, pour accumuler suffisamment d'énergie, une masse importante doit être mise en rotation rapide. Mais la réalisation d'un pivot compatible avec ces contraintes et ayant des pertes mécaniques par frottement assez faibles, est considérée comme un verrou technologique trop limitatif. Il est envisageable de réduire significativement la masse en utilisant un matériau mécaniquement très résistant, à base de fibres de carbone, et en augmentant la vitesse de rotation. Mais cette voie ne résout que partiellement le problème du pivot et devient beaucoup trop coûteuse pour être économiquement exploitable.

Pour certaines applications et notamment pour concevoir des accumulateurs de type volant cinétique, les butées classiques ne permettent pas d'obtenir à la fois les caractéristiques de masse tournante, de vitesse de rotation, de faible frottement et de durée de vie pour satisfaire aux exigences d'emploi opérationnel.

Il est connu du document US-B-6 630 761 un système de support mécanique et magnétique pour un volant. Le volant comprend un axe supérieur et un axe inférieur, ces axes étant supportés radialement par des roulements supérieur et inférieur. US-A-2008/0047753 décrit également l'utilisation de roulements pour réduire la friction entre un rotor et un centreur en supportant les efforts radiaux entre le rotor et le centreur.

De la même façon, le document JP-A-58 214 036 décrit un volant disposé sur un arbre en rotation autour d'un axe. Une suspension magnétique et un électro-aimant supportent le poids du volant. L'arbre est guidé en rotation par un roulement disposé à une extrémité de l'arbre.

Par ailleurs, le document CH-A-527 379 décrit un dispositif de réglage d'un jeu entre une masse et un support, utilisant des aimants disposés entre la masse et le support. Le dispositif comprend notamment un arbre guidé en rotation par des roulements reprenant les efforts radiaux dus à la rotation de l'arbre.

Il est également connu de US-A-2006/012258 un dispositif d'amélioration de la capacité de chargement transversal pour une portée de rotor. Le dispositif comporte notamment un stator, un rotor et un aimant permanent. Un jeu sépare le stator du rotor. L'aimant permanent permet, en maintenant le jeu séparant le stator du rotor, de compenser un effort extérieur exercé sur le rotor. Il n'y a donc aucun contact entre le rotor et le stator, ni avec aucune pièce mobile intermédiaire.

Il y a donc un besoin pour un dispositif permettant la restitution d'énergie stockée de manière efficace.

Pour cela l'invention propose un dispositif tournant comprenant

- un rotor guidé en rotation autour d'un axe vertical,
- une butée mécanique roulante et une suspension magnétique, la contribution au portage du rotor le long de l'axe vertical étant répartie entre la butée mécanique roulante et la suspension magnétique.

Selon une variante, le rapport de répartition de la contribution au portage de la suspension magnétique est compris entre 10 et 90%.

Selon une variante, le rotor est guidé en rotation par des organes de guidages en rotation choisis dans le groupe comprenant des roulements à billes, des roulements à rouleaux, des roulements à aiguilles, des paliers magnétiques ou une combinaison de ces éléments.

Selon une variante, la butée mécanique roulante est une butée à rouleaux coniques ou une butée à billes.

Selon une variante, la suspension magnétique comprend des aimants disposés selon la configuration de « Klaus Halbach » et un élément conducteur de l'électricité en regard des aimants.

Selon une variante, les aimants sont agencés en anneau et l'élément conducteur est en forme d'anneau massif ou ajouré.

Selon une variante, le rotor est un volant d'inertie.

Selon une variante, le dispositif comprend un moteur/générateur électrique accouplé à la structure tournante, pour l'accélération du rotor en utilisant de l'énergie électrique ou pour le ralentissement du rotor en restituant tout ou partie de l'énergie cinétique stockée dans le rotor sous forme d'énergie électrique.

Selon une variante, le dispositif comporte une enceinte étanche dans laquelle ledit pivot vertical et la structure tournante sont placés.

Selon une variante, le dispositif comprend en outre une pompe pour la réduction de la pression dans l'enceinte.

Selon une variante, le dispositif comporte un bouclier externe résistant aux débris du pivot et/ou de la structure tournante en cas de rupture.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, une vue du dispositif tournant ;
- figure 2, une vue d'une suspension magnétique du dispositif de la figure 1.

L'invention se rapporte à un dispositif tournant comprenant un rotor guidé en rotation autour d'un axe vertical et une butée mécanique roulante et une suspension magnétique. La contribution au portage du rotor le long de l'axe vertical est répartie entre la butée mécanique roulante et la suspension magnétique. L'association parallèle de la butée mécanique et de la suspension magnétique permet la restitution d'énergie stockée dans le rotor en rotation de manière efficace car elle permet au rotor de tourner à une vitesse élevée et d'avoir un coefficient de frottement faible.

Il est en particulier question d'un dispositif permettant de supporter un rotor sous forme de volant d'axe vertical accumulant de l'énergie cinétique récupérable. L'invention s'applique notamment aux accumulateurs d'énergie cinétique dits volants d'inertie ou volants cinétiques, placés dans une enceinte où règne une pression de gaz très faible.

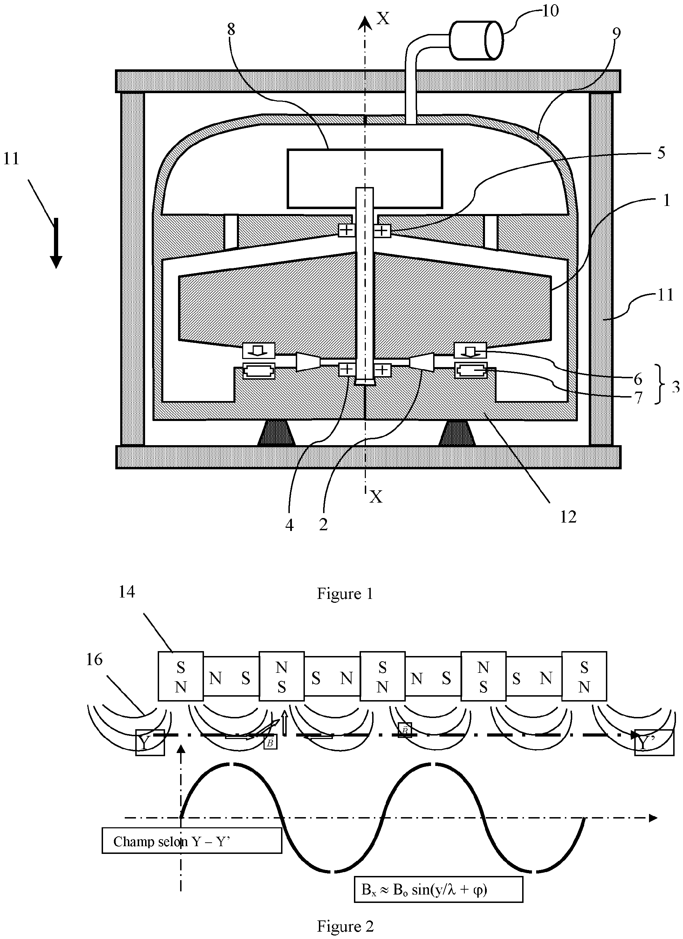

La figure 1 montre le dispositif tournant. Le dispositif tournant 10 comporte un rotor 1. Le rotor 1 est par exemple un volant d'inertie. Le rotor 1 est une structure mobile tournante 1 voulue massive, avec une masse M, et élancée pour avoir un moment d'inertie J élevé. Sous forme de volant d'inertie, le rotor est de préférence monobloc pour plus de robustesse. Le rotor 1 est positionné verticalement et son axe de rotation est repéré par l'axe géométrique XX'. Pour permettre la rotation, le rotor 1 est posé sur une butée mécanique roulante 2 et une suspension magnétique 3. La butée mécanique 2 est une butée verticale roulante et la suspension magnétique 3 est également verticale et agissant de façon couplée et en parallèle de la butée mécanique 2. Lors de la mise en oeuvre du dispositif, la butée 2 et la suspension 3 reprennent les efforts verticaux causés par la gravité sur la masse du rotor. La butée 2 et la suspension 3 supportent la masse du rotor selon la verticale, c'est-à-dire selon la direction de la pesanteur (flèche 11 sur la figure 1). La butée mécanique roulante 2 et la suspension magnétique 3 sont concentriques. La butée mécanique roulante 2 et la suspension magnétique 3 constituent un pivot. Il s'agit d'un pivot mécanique magnétiquement assisté.

La figure 2 montre la suspension magnétique 3. Celle-ci peut être composée de deux séries d'anneaux se faisant face : des anneaux constitués de séries d'aimants permanents disposés par exemple selon la configuration de « Klaus Halbach » (anneau d'aimants 6), fixés par exemple sur le rotor 1 et une série d'anneaux en matériau conducteur, du cuivre par exemple, massifs (plaque) ou ajourés (plaque ajourée), et fixés sur un socle 12 du dispositif tournant 10 (anneau conducteur 7). Des courants de Foucauld induits circulent dans les anneaux 7 en matériau conducteur. La série d'anneaux en matériaux conducteurs ajourés peut être une plaque avec des fentes pour que les courants de Foucault circulent autour des fentes afin d'éviter les courants de Foucault parasites qui induisent des pertes.

La butée mécanique roulante 2 est par exemple une butée à rouleaux coniques (performances meilleures) ou une butée à billes.

Pour que la rotation soit stable, l'axe de rotation est mécaniquement matérialisé par un système de guidage en rotation, représenté sur le schéma sous la forme de deux organes de guidage 4 et 5. Sans que cela soit limitatif, les organes de guidage sont par exemple des roulements à billes ou à rouleaux, des roulements à aiguilles, des paliers magnétiques etc.

La force axiale supportée par la butée mécanique roulante 2 et la suspension magnétique 3, résulte de l'action de la pesanteur d'accélération « g » (selon la verticale) sur la masse M, soit une force M.g. Selon l'invention, cette force d'appui axiale M.g est équilibrée par une réaction constituée de deux contributions. La première, F1, est apportée par la butée mécanique et la seconde, F2, est apportée par la suspension magnétique. Le système pivot transmet la charge M.g due à la masse de la structure tournante, au socle 12 rigide reposant sur le sol. Pour des raisons de durée de vie, il est souhaitable que les deux organes de guidage 4 et 5 ne soient pas contraints par la charge. Ceci est obtenu en montant ces organes « glissants ». Comme il n'y a pas de composante latérale de la charge si l'axe XX' est bien vertical, ces organes ne sont sollicités, par exemple, que par des charges alternatives dues aux défauts d'équilibrage. Cette sollicitation peut être rendue très faible en équilibrant correctement le rotor 1 (qui est par exemple un volant d'inertie) constituant la structure tournante. Les deux organes de guidage peuvent donc être de dimensions réduites.

Selon l'invention, l'équilibre des forces verticales est obtenu avec F1 + F2 = M.g

Si l'une des composantes du système n'est pas nulle, F1 et F2 sont toujours plus petits que M.g. En d'autres termes, chaque réaction F1 et F2 supporte moins que la charge totale. Le rapport de répartition de la charge, F2 / F1 + F2 (exprimé en %) exprime la part de la charge reprise par la suspension magnétique. Il est caractéristique de l'efficacité du système. Pour un rapport de répartition limite, égal à 0 ou 1, l'une des composantes du système ne participe pas à l'appui du rotor. Celle qui est active supporte la totalité de la charge et impose ses limites au système. Par contre, si le rapport de répartition est proche de 50%, chaque composante ne porte que la moitié de la charge M.g. De ce fait, chaque composante fonctionne avec une marge de sécurité plus importante. Il peut alors être choisi d'augmenter soit la charge M, soit la vitesse de rotation, qui dépend de la capacité de charge de la butée 2, soit la durée de vie. Comme les lois qui régissent ces grandeurs ne sont pas linéaires, l'effet sur les performances est très important, pouvant atteindre un facteur 10. Pour que l'efficacité soit suffisante, et sans que cela soit limitatif, il est souhaitable que le rapport de répartition de la contribution au portage de la suspension magnétique soit compris entre 10 et 90%.

Dans l'exemple de réalisation illustré sur la figure 1, le rotor 1 sous forme de volant d'inertie, d'axe de rotation vertical, pèse 6 tonnes. Son diamètre extérieur est égal à environ 1,5 mètre. Il est réalisé en acier à haute résistance mécanique. Ce volant d'inertie est supporté verticalement par une butée à rouleaux coniques d'environ 100 mm de diamètre. L'axe du volant d'inertie est maintenu en position verticale par les deux organes de guidage 4 et 5 qui peuvent être de petites dimensions car ils sont glissants et ne supportent pas la charge. La suspension magnétique 3 exerce la force répulsive F2 entre l'anneau d'aimants 6, disposés selon la configuration de Klaus Halbach, et l'anneau conducteur 7 centré sur l'axe XX'.

La configuration de Klaus Halbach est décrite dans la figure 2. Elle consiste à associer des aimants 14 que l'on fait pivoter d'un quart de tour à chaque pas. Cette configuration permet d'obtenir une aimant composite ayant les propriétés particulières : l'aimantation 16 n'apparaît que d'un coté de la série et elle est pratiquement nulle de l'autre. Le côté où apparaît l'aimantation dépend de l'orientation des aimants. La figure 2 montre l'anneau d'aimants 6 déployé le long l'un axe YY'. Le champ magnétique ainsi obtenu est tournant quand on se déplace le long de l'axe YY'. De ce fait, la projection sur un axe normal à YY' est pratiquement sinusoïdale et de la forme :

$$Bx \approx Bo\ \sin(y/\lambda + \varphi)$$

y étant la position angulaire autour de l'anneau d'aimants 6 le long de l'axe YY' en développé,

$\lambda$ étant le pas des aimants 14

$\varphi$ étant le décalage angulaire par rapport à un point zéro de y.

Le choix d'aimants puissants, par exemple en Samarium-Cobalt, la vitesse de rotation possible, d'environ 7000 tr/mn, du fait de la résistance mécanique de l'acier du rotor (sous forme de volant d'inertie), le nombre d'aimants 14 et leur disposition, permettent, dans l'exemple présenté, d'obtenir une force répulsive d'environ 3 tonnes.

L'effort vertical supporté par la butée mécanique 2 est donc égal à 6 - 3 tonnes, soit 3 tonnes. Cette limitation de l'effort vertical appliqué sur la butée mécanique 2, avec un rapport de répartition de 50 % permet une augmentation très importante de la durée de vie de la butée que l'on peut estimer multipliée par 5 à 6 par rapport à ce qu'elle aurait été sans l'invention. Ce gain s'explique dans la mesure où la durée de vie s'effondre de façon quasi-exponentielle avec la charge, pour une vitesse de rotation donnée. Cette augmentation de la durée de vie par une diminution de 50% de la charge appliquée sur la butée mécanique 2, résulte d'une diminution significative des frottements internes au roulement.

Pour une charge donnée, il existe une pluralité de paramètres permettant d'obtenir des vitesses de rotation plus ou moins élevées avec des durées de vie plus ou moins longues. Les paramètres sont notamment la configuration de la butée mécanique 2 de type à billes ou à rouleaux, les dimensions associées et les organes accessoires pour améliorer les performances (tels que la lubrification, par exemple). Cependant, pour une charge donnée et une durée de vie minimale imposée, il existe une vitesse de rotation maximale, qui ne peut pas être dépassée. Cette limite, de nature physique, donc infranchissable avec uniquement la butée mécanique 2, définie par les paramètres précités, a des répercussions majeures sur l'efficacité technico-économique des machines utilisant ces dispositifs.

Selon l'invention, c'est le couplage de la butée mécanique et de la suspension magnétique qui permet de dépasser cette limite. Ce couplage est possible et efficace car l'une des composantes, la butée mécanique 2 (à billes ou à rouleaux) est rigide et assure la stabilité du système alors que l'autre (la suspension magnétique) est souple et s'adapte en permanence à la première composante, du fait que le couplage se fait par une action à distance. Les 2 dispositifs ne se brident pas mutuellement. Cette adaptabilité de la composante magnétique est particulièrement compatible avec les organes de guidage radial 4, 5 qui, eux-mêmes, assurent la stabilité latérale de la rotation. Ces organes de guidage étant peu chargés, leur durée de vie ne pose pas de difficulté particulière.

Pour expliciter plus en détail les avantages de l'invention, un exemple particulier de réalisation et de calcul va être présenté, dans le cas où le rotor 1 est du type volant d'inertie précédent.

A titre d'exemple, l'analyse est faite sur une butée mécanique supportant seule un volant de 6 tonnes qu'il est nécessaire de faire tourner à 7000 tr/mn pour atteindre une capacité opérationnelle suffisante. La durée de vie souhaitée est de 30 ans, 25 ans minimum.

La méthode standard de calcul de la butée mécanique 2 de type à rouleaux (ou à billes) est décrite ci-après. Elle consiste à adapter le choix du composant à la charge en fonction de la durée de vie souhaitée. La durée de vie d'un roulement est bien décrite par une formule simple, de la forme suivante :

$$L_F = K_F \cdot K_A \cdot K_L \cdot \left( \frac{C}{XF_R + YF_A} \right)^p \quad \text{(formule 1)}$$

Dans cette formule,

- LF représente le nombre de tours que le roulement peut réaliser avant de se dégrader, avec un niveau de fiabilité correspondant à F en fin de vie. De façon standard, F est fixé à 90%. Cet aspect de la fiabilité porte sur la fiabilité marginale en fin de vie. Elle est, bien entendu, bien plus élevée, et proche de 100%, en début de vie ;
- le coefficient KF permet d'ajuster le niveau de fiabilité souhaité en fin de vie. Il est égal à 1 pour F = 90% et il est inferieur à 1 si la fiabilité en fin de vie doit être supérieure (ce qui oblige à réduire la charge ou admettre une durée de vie possible plus courte).
- le coefficient KA est une référence dépendant de la configuration du roulement. Il est, en général, égal à $10^6$ tours pour tous les roulements classiques, l'ajustement se faisant par la détermination du paramètre C par le fabricant. Il existe une exception à cette règle, pour les butées à rouleaux coniques pour lesquels la valeur de KA est de 90 $10^6$. Cette particularité résulte du fait que les butées à rouleaux coniques ont une pression de contact moins importante que les butées à billes, qu'elle se repartit sur l'ensemble des rouleaux, ce qui n'est pas le cas pour des roulements et surtout que les rouleaux roulent sans glissement si l'angle du cône est bien choisi. De ce fait, l'échauffement comme l'usure sont considérablement réduits ;
- le coefficient KL est déterminé par le système de lubrification retenu et son efficacité en termes de refroidissement. Le montage le plus simple, à la graisse, correspond à une valeur de KL égale à 1. Avec une lubrification forcée, par jet d'huile, le coefficient KL peut atteindre une valeur de 3 à 4, ce qui multiplie d'autant la durée de vie des butées ;
- le paramètre C correspond à la charge maximale, que le roulement peut supporter, pour tenir KA tours (soit en général $10^6$), avec une probabilité de non-rupture de 90%. Ce paramètre est fourni par les fabricants de roulements, à partir de données expérimentales ;
- le dénominateur, XFR + YFA = P, correspond au calcul de la charge équivalente appliquée sur le roulement. FA et FR sont les charges respectivement axiales et radiales appliquées et les paramètres X et Y sont spécifiques à chaque type de roulement. Ils dépendent de leur conception, en particulier des angles de portée des billes ou des rouleaux et sont généralement déterminés par le fabricant à partir d'essais.
- le paramètre « p » vaut 3 pour les roulements à billes et 10/3 pour les butées à rouleaux. Cette différence résulte de la différence de géométrie de la portée des éléments roulants coniques sur le chemin de roulement.

La vitesse n'intervient pas dans cette formule. Cependant, elle intervient indirectement dans la traduction du nombre de tours en durée de vie. La vitesse intervient également dans une relation qui peut s'établir entre la charge maximale admissible (paramètre C) et la vitesse de rotation maximale N en tr/mn: Pour une réalisation particulière d'un roulement (une certaine «série » dans une gamme), le produit N.C varie peu et reste compris entre 20 et 60 $10^6$.

La formule ci-dessus est un modèle de vieillissement assez représentatif de la réalité. I1 est utilisé de façon standard par les concepteurs de mécanismes. Il est utilisable dans le cas de l'invention et permet d'établir une relation entre la masse du volant et la durée de vie du pivot associé.

Pour effectuer un calcul illustrant l'invention, nous avons choisi comme butée mécanique 2 une butée à rouleaux coniques standard, d'un fabricant industriel. La charge appliquée est de 6 tonnes avec une vitesse de rotation de 7 000 tr/mn. Les paramètres du calcul de la durée de vie de la butée mécanique sont rappelés ci-dessous :

- Diamètre externe de la butée mécanique 2 : 100 mm avec un passage central d'environ 55 mm ;
- Charge statique Co d'environ 700 kN pour une capacité de charge dynamique axiale C, de 200kN;
- Le coefficient KF de fiabilité en fin de vie standard est suffisant pour le besoin, car une dégradation du fonctionnement en fin de vie se traduit par le développement de vibrations détectables et concrétise simplement la nécessité de remplacer l'équipement avant sa destruction imminente. Comme l'installation est sécurisée, une destruction accidentelle n'aurait pas de conséquences graves. KF peut donc être conservé égal à 1.

- Pour les butées axiales, KA est particulièrement favorable avec une valeur de $90 \cdot 10^6$, beaucoup plus grande que pour les roulements classiques.
- La lubrification permet d'obtenir une durée de vie maximale et doit être soignée pour être optimale et compatible avec le vide (voir ci-dessous). L'utilisation d'une huile haute performances à faible tension de vapeur et à très longue durée de vie, est préférable. Le coefficient KL correspondant peut alors atteindre une valeur égale à 4. L'exposant p du rapport des charges est égal a 10/3, soit une valeur un peu supérieure a celle des roulements à billes (égale à 3).
- Pour le calcul de la charge équivalente X vaut 0 et Y vaut 1. Cependant, si l'invention n'est pas utilisée, cette charge équivalente est égale au poids de 60 kN du volant.

L'application de la formule 1 précédente donne donc une durée de vie égale à:

$$L_F = 1 \cdot 90 \cdot 10^6 \cdot 4 \cdot \left( \frac{200}{0 + 1 \cdot 60} \right)^{10/3} = 2.10^{10} \, \text{tr}$$

Avec une vitesse de rotation de 7000 tr/mn, cette valeur représente 48000 heures de fonctionnement, soit 5,5 années. On remarque que sans lubrification, cette durée de vie se réduirait d'un facteur 4 pour tomber à 1,4 année.

Cette durée de vie est largement inférieure aux 30 années nécessaires. Puisque toutes les améliorations technologiques classiques sont utilisées, il n'y a plus de possibilité d'amélioration technologique supplémentaire significative qui respecte la masse à supporter et la vitesse de rotation, nécessaires au respect des performances, sauf à utiliser l'invention comme démontré plus bas. En particulier, l'utilisation d'une butée mécanique plus grosse imposerait de réduire considérablement la vitesse de rotation.

L'analyse est maintenant portée sur l'usage d'une suspension magnétique. Il existe plusieurs façons de réaliser la partie suspension magnétique. De préférence, on réalise une suspension magnétique passive selon un processus magnétodynamique simple, utilisant des aimants permanents et une structure d'induction tout aussi simple. Cette solution est plus simple que d'utiliser des bobinages pour créer les pôles magnétiques et à faire passer des courants adaptés, pilotés par électronique, pour réaliser les oppositions de pôles nécessaires. Cette façon de faire serait compliquée et nécessiterait des contacts tournants qui peuvent se dégrader rapidement, ce qui va à l'encontre d'un objectif de longue durée de vie.

Dans cette suspension axiale, une série d'aimants 14 constitue une alternance de pôles nord et sud à progression sinusoïdale (configuration de Halbarch), selon une géométrie circulaire développée dans la figure 2. Cette série d'aimants 14, constituant l'anneau 6 d'aimants, est positionnée devant l'anneau 7 conducteur pouvant être constitué d'un simple anneau métallique bon conducteur. Une façon plus efficace de réaliser cet anneau conducteur 7 consiste à associer deux bagues conductrices concentriques reliées par un grand nombre de segments disposés de façon radiale. En tournant de façon concentrique devant l'anneau conducteur 7, l'anneau 6 d'aimants induit des courants alternatifs de type « courants de Foucault ». Ces courants engendrent, à leur tour, des dipôles magnétiques de sens contraire aux pôles inducteurs (ils tendent à annuler la cause de l'induction). Les pôles inducteurs et induits présentent face à face des pôles de mêmes noms, ils se repoussent et génèrent ainsi une force portante. Il faut cependant remarquer qu'il existe un léger déphasage entre les pôles inducteurs et induits, ce qui génère une force de trainée assimilable à un frottement. Elle est d'autant plus faible que la fréquence, donc la vitesse de rotation et le nombre d'aimants par tour, sont élevés.

Selon les résultats de travaux expérimentaux, la force de portance obtenue est donnée par une formule de type Fp(f, d, S) permettent de calculer la force portante (avec S la surface d'aimants en $dm^2$; f : la fréquence en Hz et d : l'entrefer en mm). De façon efficace mais non exhaustive, les aimants peuvent être réalisés en matériau de type Samarium-Cobalt. Cette formule est doublement hyperbolique pour les deux variables f et d.

Il serait envisageable d'utiliser un tel dispositif pour suspendre une charge tournante « en lévitation magnétique ». Pour cela, il faudrait que l'ensemble des paramètres de fonctionnement du système conduise à une stabilisation de la portance à une distance, entre pôles magnétiques, supérieure à la profondeur de ces pôles magnétiques sous la surface, plus une marge de sécurité suffisante.

De façon compatible avec les données déjà décrites, plusieurs séries d'aimants peuvent être agencées de façon concentrique, pour obtenir un disque de diamètre externe 400mm et de diamètre interne 160 mm. La surface portante est donc d'environ 10 $dm^2$.

On utilise des aimants en samarium - cobalt (aimants hautes performances mais classiquement industriels) et un entrefer réduit à une valeur de 2 mm. La fréquence est déterminée par le nombre de pas d'aimants et par la vitesse de rotation. En utilisant des aimants de 8,5 mm de largeur moyenne, au diamètre moyen, le nombre d'aimants par tour est de 104 soit 26 pas magnétiques par tour puisqu'il faut 4 aimants pour faire un pas. Une vitesse de rotation de 115,5 tours par seconde (725 rd/s sur 27), la fréquence d'alternance des courants induits est donc de 115,5 *26, soit 3000 Hz.

Avec la formule précédente donnant la force portante Fp (f, d, S) nous pouvons calculer la portance magnétique en Newton du dispositif, soit 24 360 N < M.g = 60 000N.

Ce calcul conduit à constater qu'il n'y a pas de possibilité de supporter la charge du volant d'inertie, avec la configuration magnétique décrite, seule. Or cette configuration est la plus puissante qui soit compatible avec la vitesse de rotation et la configuration.

Les deux analyses précédentes montrent donc que la butée à rouleaux seule ne peut pas assurer la durée de vie et que la suspension magnétique seule ne peut pas porter la charge.

Selon l'invention, le couplage de la suspension magnétique (magnétodynamique) 3 avec la butée mécanique 2 précédemment décrite permet d'atteindre le niveau de performance nécessaire. Selon l'invention, l'association de la butée mécanique 2 (par exemple à rouleaux coniques) et de la suspension magnétique 3 conduit à introduire un terme supplémentaire dans la formule de calcul de la butée mécanique 2. En effet, le dénominateur de la formule 1 représente la charge effectivement portée par la butée mécanique (à rouleaux dans le cas de l'exemple). Or la portance de la suspension magnétique 3 se déduit strictement de la charge totale. Cela est d'autant plus vrai que la force magnétique étant une force « à distance », il n'y a aucun processus hyperstatique qui puisse contrarier ce processus. Cette formule prend alors la forme ci-dessous :

$$L_F = K_F \cdot K_A \cdot K_L \cdot \left( \frac{C}{XF_R + Y\left(F_A - F_P(f,d,S)\right)} \right)^p \qquad \text{(formule 2)}$$

Le changement qui apparait dans le calcul concerne la charge équivalente. On a toujours X égal à 0 et Y égal à 1. Cependant, cette charge équivalente (égale au poids de 60 kN du volant), est réduite par l'effet de portance de la suspension magnétique (ou magnétodynamique), reprenant 24,36 kN des 60 kN du poids brut. Le résultat du calcul se trouve fondamentalement changé, du fait de la forme hyperbolique et de la puissance 10/3 de la formule :

$$L_F = 1 \cdot 90 \cdot 10^6 \cdot 4 \cdot \left( \frac{200}{0 + 1 \cdot (60 - 24,4)} \right)^{10/3} = 11,2 \cdot 10^{10} \, \text{tr}$$

Ce calcul montre que la durée de vie du dispositif, selon l'invention, est multipliée par 5,6. Les 5,5 années de durée de vie de la butée à rouleaux coniques seule se trouvent portées à 30,8 années, ce qui satisfait le besoin initialement exprimé.

Bien entendu, les calculs ci-avant présentés sont des approximations susceptibles d'une certaine incertitude, mais ils montrent l'ordre de grandeur de l'efficacité opérationnelle de l'invention.

Selon l'invention, le dispositif associant en parallèle une butée mécanique roulante et une suspension magnétique permet le bon fonctionnement du rotor sous forme de volant cinétique, car il permet simultanément de porter une charge élevée, de tourner à une vitesse élevée, d'avoir un coefficient de frottement faible et une grande durée de vie. Cette association est possible par le fait que la suspension magnétique agit « à distance », ce qui permet un couplage physique souple et isostatique (contrairement à l'utilisation de deux butées mécaniques, hyperstatiques, et dont seulement l'une des butées fonctionnerait à un instant t, d'où une usure de l'une plus grande que l'autre). Ce couplage est d'autant plus efficace que le dispositif est positionné verticalement et l'effet de lévitation partiel de la suspension magnétique s'oppose directement à la force de gravité agissant sur la masse tournante.

On voit donc qu'il est possible de réaliser de façon industrielle un dispositif tournant pouvant supporter des charges et des vitesses de rotation élevées, tout en ayant un coefficient de frottement faible est une durée de vie élevée, contrairement aux préjugés qui consistaient à croire qu'il est impossible de concevoir un dispositif tournant alliant toutes les performances requises pour réaliser un accumulateur d'énergie cinétique opérationnel.

Ce dispositif est un accumulateur d'énergie opérationnel, permettant d'accumuler de l'énergie dont la restitution peut être décalée dans le temps. Par exemple, ce dispositif permet de décaler dans le temps l'utilisation d'une énergie solaire uniquement disponible en journée ; le décalage peut être fait vers le soir, période au cours de laquelle se situe le pique de consommation électrique. Pour cela, un moteur-générateur électrique 8 visible sur la figure 1 est accouplé au rotor 1. Il permet d'accélérer le rotor 1 en utilisant de l'énergie électrique disponible (telle que de l'énergie solaire). La vitesse maximum de rotation correspond au point de charge maximale. Le moteur-générateur 8 permet aussi, à la demande, de ralentir la vitesse de rotation en restituant tout ou partie de l'énergie cinétique stockée dans le rotor 1 (par exemple un volant d'inertie), sous forme d'énergie électrique. On parvient ainsi à décaler dans le temps la restitution de l'énergie électrique disponible.

Le dispositif comporte une enceinte étanche 9 dans laquelle ledit pivot vertical et la structure tournante sont placés. La création d'un vide dans l'enceinte 9 permet d'éviter le frottement du rotor sur l'air et les ondes de choc dues à la vitesse tangentielle. De préférence, pour favoriser la réduction de la pression dans l'enceinte et pour pomper le mélange gazeux résiduel, le dispositif comprend en outre une pompe 10. Ceci permet de réduire la pression à une valeur la plus faible possible, de préférence inférieure à 10 mbar. Une pression inférieure à 10 mbar est un maximum nécessaire pour que le frottement aérodynamique reste faible. Elle doit être encore plus faible, si possible inférieure à $10^{-3}$ mbar, pour que les couplages de type soniques soient peu perceptibles.

Le dispositif peut aussi comporter un bouclier externe 11 résistant aux débris du dispositif en cas de rupture. En effet, la rupture d'un élément du dispositif tournant, tel que la suspension magnétique 3, la butée mécanique 2 ou l'axe XX', alors que le rotor serait en rotation, provoquerait la projection de débris de manière dangereuse. Le bouclier 11 externe permet la protection contre tout projectile ce qui permet de sécuriser l'installation. Ce bouclier externe peut être, par exemple, un remplissage de béton autour de l'enceinte étanche.

L'homme de l'art pourra appliquer ce concept à de nombreux autres systèmes similaires sans sortir du cadre de l'invention défini dans les revendications jointes.

**Revendications**

1. Dispositif tournant comprenant

   - un rotor (1) guidé en rotation autour d'un axe vertical,
   - une butée mécanique (2) roulante et une suspension magnétique (3), la contribution au portage du rotor le long de l'axe vertical étant répartie entre la butée mécanique roulante et la suspension magnétique.

2. Le dispositif selon la revendication 1, dans lequel le rapport de répartition de la contribution au portage de la suspension magnétique est compris entre 10 et 90%.

3. Le dispositif selon les revendications 1 et 2, dans lequel le rotor est guidé en rotation par des organes de guidages en rotation (4, 5) choisis dans le groupe comprenant des roulements à billes, des roulements à rouleaux, des roulements à aiguilles, des paliers magnétiques ou une combinaison de ces éléments.

4. Le dispositif selon l'une des revendications 1 à 3, dans lequel la butée mécanique roulante (2) est une butée à rouleaux coniques ou une butée à billes.

5. Le dispositif selon l'une des revendications 1 à 4, dans lequel la suspension magnétique (3) comprend des aimants (14) disposés selon la configuration de « Klaus Halbach » (6) et un élément (7) conducteur de l'électricité en regard des aimants.

6. Le dispositif selon la revendication 5, dans lequel les aimants (14) sont agencés en anneau (6) et l'élément conducteur est en forme d'anneau (7) massif ou ajouré.

7. Le dispositif selon l'une quelconque des revendications 1 à 6, dans lequel le rotor (1) est un volant d'inertie.

8. Le dispositif selon l'une quelconque des revendications 1 à 7 comprenant un moteur/générateur électrique (8) accouplé à la structure tournante, pour l'accélération du rotor (1) en utilisant de l'énergie électrique ou pour le ralentissement du rotor (1) en restituant tout ou partie de l'énergie cinétique stockée dans le rotor sous forme d'énergie électrique.

9. Le dispositif selon l'une quelconque des revendications 1 à 8 comportant une enceinte étanche (9) dans laquelle ledit pivot vertical et la structure tournante sont placés.

**10.** Le dispositif selon l'une des revendications 1 à 9, comprenant en outre une pompe pour la réduction de la pression dans l'enceinte.

**11.** Le dispositif selon l'une quelconque des revendications 1 à 10, comportant un bouclier externe (11) résistant aux débris du pivot et/ou de la structure tournante en cas de rupture.

Figure 1

Figure 2

$$B_x \approx B_o \sin(y/\lambda + \varphi)$$

Champ selon Y – Y'

Europäisches
Patentamt

European
Patent Office

Office européen
des brevets

**RAPPORT DE RECHERCHE EUROPEENNE**

Numéro de la demande

EP 12 15 6626

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 630 761 B1 (GABRYS CHRISTOPHER W [US]) 7 octobre 2003 (2003-10-07) * colonne 3, ligne 22 - colonne 5, ligne 24; figures 1,2 * | 1-4,7-10 | INV. F16C32/04 F16C39/06 H02K7/02 F16F15/315 |
| X | US 2008/047753 A1 (HALL DAVID R [US] ET AL) 28 février 2008 (2008-02-28) * alinéa [0030] - alinéa [0049]; figures 2-8 * | 1,3-7, 9-11 | |
| X | JP 58 214036 A (MITSUBISHI ELECTRIC CORP) 13 décembre 1983 (1983-12-13) * abrégé; figure 1 * | 1-4,7-10 | |
| X | CH 527 379 A (MAAG ZAHNRAEDER & MASCHINEN AG [CH]) 31 août 1972 (1972-08-31) * le document en entier * | 1-4 | |
| X | US 2006/012258 A1 (SUN LIN X [CA] ET AL SUN LIN [CA] ET AL SUN LIN XIANG [CA] ET AL) 19 janvier 2006 (2006-01-19) * alinéa [0029] - alinéa [0059]; revendications 1,2,17-19; figures 1-5 * | 1-4 | DOMAINES TECHNIQUES RECHERCHES (IPC) F16C F16F H02K |
| A | US 4 150 582 A (BROBECK WILLIAM M [US]) 24 avril 1979 (1979-04-24) * colonne 3, ligne 24 - ligne 66; figure 1 * | 11 | |

Le présent rapport a été établi pour toutes les revendications

| Lieu de la recherche | Date d'achèvement de la recherche | Examinateur |
|---|---|---|
| Munich | 25 avril 2012 | De Jongh, Cornelis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 15 6626

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-04-2012

| Document brevet cité au rapport de recherche | | Date de publication | Membre(s) de la famille de brevet(s) | | Date de publication |
|---|---|---|---|---|---|
| US 6630761 | B1 | 07-10-2003 | AUCUN | | |
| US 2008047753 | A1 | 28-02-2008 | AUCUN | | |
| JP 58214036 | A | 13-12-1983 | AUCUN | | |
| CH 527379 | A | 31-08-1972 | AUCUN | | |
| US 2006012258 | A1 | 19-01-2006 | AU | 2003245151 A1 | 02-02-2004 |
| | | | BR | 0312576 A | 19-04-2005 |
| | | | CA | 2492069 A1 | 22-01-2004 |
| | | | CN | 1675477 A | 28-09-2005 |
| | | | EP | 1520112 A1 | 06-04-2005 |
| | | | JP | 2005532516 A | 27-10-2005 |
| | | | KR | 20050025339 A | 14-03-2005 |
| | | | RU | 2372535 C2 | 10-11-2009 |
| | | | US | 2006012258 A1 | 19-01-2006 |
| | | | US | 2011002566 A1 | 06-01-2011 |
| | | | WO | 2004007984 A1 | 22-01-2004 |
| US 4150582 | A | 24-04-1979 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6630761 B
- US 20080047753 A
- JP 58214036 A
- CH 527379 A
- US 2006012258 A